# EUROPÄISCHE PATENTSCHRIFT

(11) **EP 2 063 720 B1**
(45) Veröffentlichungstag und Bekanntmachung des Hinweises auf die Patenterteilung: **21.04.2010**
(21) Anmeldenummer: 07802111.0
(22) Anmeldetag: 04.09.2007
(51) Int. Cl.: A23L 1/01, A23L 1/217

(54) **VERFAHREN ZUM HERSTELLEN VON KARTOFFELCHIPS**
METHOD FOR THE PRODUCTION OF POTATO CHIPS
PROCÉDÉ DE PRODUCTION DE POMMES DE TERRE CHIPS

(30) Priorität: 04.09.2006 DE 102006041447
(43) Veröffentlichungstag der Anmeldung: 03.06.2009
(73) Patentinhaber: Lorenz Bahlsen Snack-World Holding GmbH&Co. KG, 63263 Neu-Isenburg (DE)
(72) Erfinder: JANK, Rüdiger, 16548 Glienicke (DE); WEBER, Bernd, A-5440 Golling (AT); FRANKE, Knut, 49610 Quakenbrück (DE); MOORKAMP, Heinz, 49740 Haselünne-Flechum (DE)
(74) Vertreter: Glawe, Delfs, Moll
(86) Internationale Anmeldenummer: PCT/EP2007/007699
(87) Internationale Veröffentlichungsnummer: WO 2008/028623

(56) Entgegenhaltungen:
- WO-A-93/25091
- WO-A-98/23161
- GB-A- 1 506 784
- GB-A- 2 392 368

## Beschreibung

Die Erfindung betrifft ein Verfahren zum Herstellen von Kartoffelchips, bei dem die Kartoffeln gewaschen, in Scheiben geschnitten werden und anschließend bei erhöhter Temperatur und Druck in einem Gas zu Kartoffelchips verarbeitet und anschließend abgekühlt werden.

Bei üblichen Herstellungsverfahren für Kartoffelchips ist es wichtig, dass sehr schnell eine starke Wärmeübertragung bei der bei diesem Verfahren verwendeten Erhitzung stattfindet. Dies erfolgt üblicherweise in einem Ölbad oder in einem anderen Fett durch Wärmeleitung, bei dem das Öl oder Fett auf Temperaturen zwischen 140 bis 200°C erhitzt wird. In diesem Öl oder Fett werden die Kartoffelscheiben frittiert. Durch die Wärmeenergie verdampft der Wasseranteil aus den Kartoffelscheiben. Gleichzeitig wird während des Frittierprozesses Öl oder Fett durch die Kartoffelscheibe aufgenommen. Als Ergebnis der durch Wärmeübertragung eingeleiteten Stoffwandlungsprozesse und der Sorptionsvorgänge entstehen die hinsichtlich ihrer sensorischen Eigenschaften bekannten Kartoffelchips.

Ein Problem bei der bekannten Herstellung dieser Kartoffelchips ist aber, dass es sich nicht vermeiden lässt, dass während des Erhitzens Öl oder Fett in die Kartoffelchips eindringt und dort verbleibt. Der hohe Fettgehalt ist ein ernährungsphysiologischer Nachteil, der zu den bekannten gesundheitlichen Folgen wie Bluthochdruck, Herz-Kreislauf-Krankheiten, Diabetes usw. führen kann. Der Trend zu fettarmen Produkten nimmt daher immer mehr zu.

Es ist daher bekannt, Kartoffelchips ohne die Verwendung von Öl oder Fett herzustellen. Bei einem bekannten Verfahren der eingangs genannten Art (WO96/39867) werden die Kartoffelscheiben auf einem Band durch einen Ofen gefördert, in dem sie durch Heißluft erhitzt werden. Es findet zunächst ein Blanchieren bei einer Temperatur von ungefähr 760°C bis 870°C statt. Dies geschieht durch Infrarotbrenner. Anschließend werden die so vorbehandelten Scheiben bei einer Temperatur von ungefähr 180°C bis 205°C mit Heißluft beaufschlagt. Dies alles geschieht bei Atmosphärendruck. Nach einer Trocknung sollen sie die arttypische Konsistenz von Kartoffelchips annehmen.

Durch vor allem die extrem hohen Temperaturen in der ersten Stufe findet zwar ein beträchtlicher Wärmeübergang statt. Der Wärmeübergang beruht auf dem Prinzip der Konvektion und/oder Wärmestrahlung. Der Energietransport ist aber gegenüber der Wärmeleitung während des Frittierprozesses wesentlich geringer. Es ist daher nicht zu erwarten, dass durch dieses Verfahren Kartoffelchips erhalten werden können, deren sensorische Qualität der von konventionell hergestellten Kartoffelchips gleichkommt. Weiterhin ist in dem angegebenen Temperaturbereich eine höhere Belastung mit Acrylamid zu erwarten.

Bei einem Verfahren der Eingang genannten Art (GB 2 392 368 A) wird die vorgenannte erste Stufe mit deren extrem hohen Temperaturen vermieden. Die Erhitzung und damit die Verarbeitung zu Kartoffelchips erfolgt ebenfalls mit einem Gas, dass aber unter erhöhtem Druck steht, um die Wärmeübertragung zu verbessern und die Kochzeit zu verringern. Dabei werden auch "steam or water vapor" vom Gas aufgenommen, das heißt, dass das Wasser in den Kartoffelnscheiben offenbar siedet. Dies wird offenbar in Kauf genommen. Der entscheidende Grund scheint der erhöhte Druck zur Verbesserung der Wärmeübertragung zu sein.

Durch dieses Kochen platzen aber die Zellwände auf. Die Oberfläche zerfasert, die Kartoffelscheibe wird brüchig, und möglicherweise zerfällt die Kartoffelscheibe sogar.

Die Aufgabe der Erfindung besteht in der Schaffung eines Verfahrens, mit dem ohne Verwendung von Öl oder Fett Chips hergestellt werden können, die im wesentlichen die Geschmackseigenschaften und mechanischen Eigenschaften insbesondere bezüglich Festigkeit und wenig oder gar nichts zerfaserter Oberfläche von traditionell im Ölbad hergestellten Chips haben.

Die erfindungsgemäße Lösung besteht darin, dass beim Verarbeitungsschritt und beim Kühlen Druck und Temperatur auf solchen Werten gehalten werden, dass die Temperatur unterhalb der bei dem jeweils vorhandenen Druck herrschenden Siedetemperatur von Wasser gehalten wird.

Dadurch ist es erstaunlicherweise möglich, Kartoffelchips zu erhalten, die im Aussehen, Geschmack und Festigkeit den nach den üblichen Verfahren hergestellten Kartoffelchips entsprechen.

Die Zubereitung von Lebensmitteln (auch Kartoffeln) unter erhöhtem Druck und erhöhter Temperatur, wobei man immer im Bereich unterhalb des Siedepunkts des Wassers verbleibt, ist zwar bekannt (GB 1 506 784). Dabei handelt es sich aber offenbar um ganze Kartoffeln. Das Verfahren würde bei Anwendung auf dünne Kartoffelscheiben ein zu großes Auslaugen der verhältnismäßig dünnen Kartoffelscheiben bewirken.

Eine vorteilhafte Ausführungsform des Verfahrens der Erfindung zeichnet sich dadurch aus, dass die Kartoffelscheiben bei einem Druck von 3 bis 20 bar einer Temperatur von 100°C bis 212, 37°C während 0,3 bis 15 Minuten ausgesetzt werden und dass der Druck über eine Zeit von 10 Sekunden bis 600 Sekunden auf Umgebungsdruck abgebaut wird.

Die Inhaltsstoffe der Kartoffelscheiben werden während der Wärme- und Druckbehandlung denaturiert. Durch den erhöhten Druck wird dabei eine Temperatur erreicht, die der Frittiertemperatur von Öl oder Fett entspricht oder sogar darüber liegen kann. Durchgeeignete Wahl von Druck und Temperatur wird ein überschreiten der Siedetemperatur von Wasser verhindert, so dass die Kartoffelscheiben nicht zerkochen. Durch die hohe Temperatur werden ähnliche Temperaturgradienten und Energieübertragungen wie während des Frittiervorgangs mit Öl oder Fett erreicht, ohne dass jedoch Öl oder Fett in die Kartoffelscheiben eindringt. Der Druckabbau nach dem Erhitzen erfolgt gesteuert, so dass die Temperatur der Kartoffelchips immer unterhalb des Siedepunkts bei dem betreffenden Druck liegt, so dass das noch in den Kartoffelscheiben enthaltene Wasser bei der Druckminderung nicht schlagartig verdampft und dadurch die Kartoffelchips zerstört.

Der Feuchtegehalt der Kartoffelchips liegt bei einer vorteilhaften Ausführungsform des Verfahrens nach dem Druckabbau zwischen 20 und 70%.

Die Druck- und Temperaturbehandlung kann bei trockener oder feuchter Atmosphäre erfolgen. Besonders bevorzugt wird aber eine trockene Atmosphäre, um eine Verdunstung des in den Kartoffelnschreiben enthaltenen Wassers während der Behandlung mit Druck, insbesondere während der Druckreduzierung zu ermöglichen.

Insbesondere wird die Druck- und Temperaturbehandlung zweckmäßigerweise bei einem Druck von 5 bis 10 bar bei einer Temperatur durchgeführt, die unterhalb des Siedepunkts von Wasser liegt.

Eine andere vorteilhafte Ausführungsform zeichnet sich durch eine Druckbehandlung bei einem Druck von 3.000 bis 8.000 bar aus. Obwohl dabei bei erhöhter Temperatur gearbeitet werden kann, ist dies erstaunlicherweise nicht nötig. Es wurde nämlich herausgefunden, dass bei so hohen Drucken die Stärkeverkleisterung schon bei Temperaturen von 20°C beginnt, während dies bei Normaldruck erst zwischen 58 und 66°C der Fall ist. Zweckmäßigerweise wird die Druckbehandlung einer Temperatur von 20°C bis 70°C durchgeführt.

Nach der Druck- und Temperaturbehandlung werden die Kartoffelscheiben nachgetrocknet. Der Feuchtegehalt nach dem Trocken liegt dabei zweckmäßigerweise zwischen 9% und 35%. Bevorzugt wird ein Feuchtegehalt zwischen 11% und 35%. Die Trocknungszeit liegt zweckmäßigerweise zwischen 4 Minuten und 30 Minuten.

Nach der Trocknung werden die Kartoffelchips vorteilhafterweise mit Heißluft bei 180°C bis 260°C während 15 bis 60 Sekunden thermisch behandelt und erhalten so einen Geschmack, der den üblichen Kartoffelchips sehr ähnlich ist.

Besonders bevorzugt ist dabei eine Temperatur 180°C bis 240°C und eine Prozessdauer von 20 Sekunden bis 50 Sekunden.

Insbesondere, um die Bildung von Acrylamid einzuschränken, kann die Temperatur für die Trocknung auf 140°C verringert werden, sobald eine Feuchte von 5% unterschritten wird.

Vorteilhafterweise erfolgt die Wärme- und Druckbehandlung in einer Hochdruckkammer. Dabei ist sowohl eine chargenweise Erhitzung als auch eine kontinuierliche Erhitzung in einer Hochdruckkammer möglich, die auf beiden Seiten von Druckschleusen verschlossen ist und durch die die Kartoffelscheiben kontinuierlich hindurchgeführt werden.

Sehr vorteilhaft ist auch eine Vorbehandlung der Kartoffeln beziehungsweise der Kartoffelscheiben mit Hochspannungsimpulsen vor der Wärme- und Druckbehandlung beziehungsweise nach der Wärme- und Druckbehandlung, wodurch eine Verbesserung der Permeabilität und damit der Textur möglich ist. Die Hochspannungsimpulse haben dabei zweckmäßigerweise eine Spannung von 3.000 V bis 4.000 V. Bei der Behandlung mit Hochspannungsimpulsen vor der Wärme- und Druckbehandlung kann das Anlegen der Hochspannungsimpulse im Wasserbad erfolgen. Dabei und beim Anlegen von Hochspannungsimpulsen nach der Wärme- und Druckbehandlung hat es sich als besonders zweckmäßig erwiesen, wenn die Hochspannungsimpulse an Elektroden angelegt werden, die einen Abstand von 5 bis 6 cm haben.

Nach diesen Behandlungen können die Kartoffelchips mit Fett besprüht werden, falls man nicht völlig fettfreie Chips erhalten möchte. Zweckmäßigerweise wird dabei der Fettgehalt unter 10% gehalten. Schließlich können, um den Geschmack zu verbessern, die fertigen Chips gewürzt werden.

Eine besonders vorteilhafte Form der Trocknung der Kartoffelchips besteht in der Dampftrocknung.

Die Erfindung wird im Folgenden anhand von vorteilhaften Ausführungsformen unter Bezugnahme auf die beigefügten Zeichnungen beispielsweise beschrieben. Es zeigen:
- Fig.1: eine erfindungsgemäße Vorrichtung zur Durchführung des Verfahrens; und

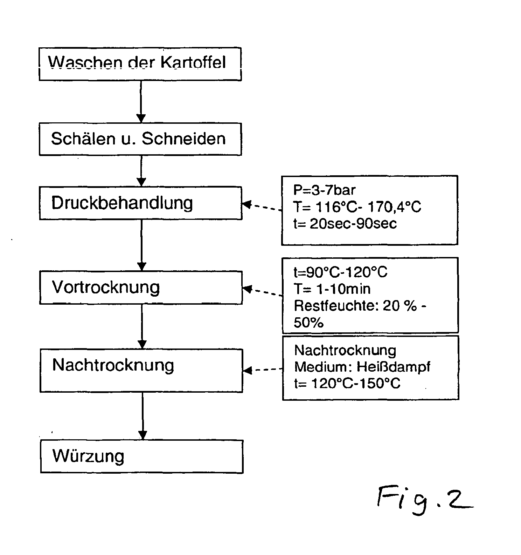

- Fig. 2: schematisch das Dampftrocknungsverfahren

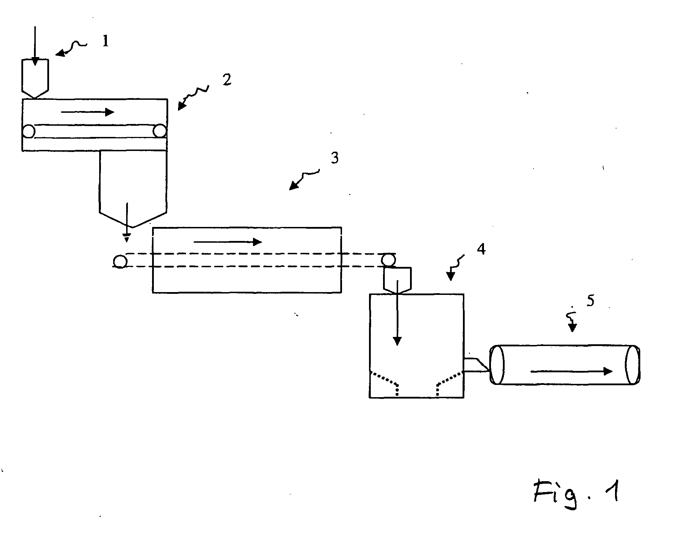

Die in Fig. 1 dargestellte Vorrichtung weist einen Einfülltrichter 1, auf der zur Beschickung der Druck- und Heizkammer 2 dient. In der Druck- und Heizkammer 2 werden die Kartoffelscheiben unter definierten Bedingungen (Druck, Temperatur, Zeit) gelatiniert. Nach dem Verlassen der Druck- und Heizkammer 2 erfolgt eine Nachtrocknung im Trockner 3. Die nachgetrockneten Pellets werden im Heißluftofen 4 mittels erhitzter Luft und entsprechender Energieübertragung auf die Pellets leicht expandiert. Anschließend erfolgt die übliche Würzung der Chips in einer Trommel 5.

## Patentansprüche

1. Verfahren zum Herstellen von Kartoffelchips, bei dem die Kartoffeln gewaschen, in Scheiben geschnitten werden und anschließend bei erhöhter Temperatur und Druck in einem Gas zu Kartoffelchips verarbeitet und anschließend abgekühlt werden, **dadurch gekennzeichnet, dass** beim Verarbeitungsschritt und beim Kühlen Druck und Temperatur auf solchen Werten gehalten werden, dass die Temperatur unterhalb der bei dem jeweils vorhandenen Druck herrschenden Siedetemperatur von Wasser gehalten wird.

2. Verfahren nach Anspruch 1, **dadurch gekennzeichnet, dass** die Kartoffelscheiben bei einem Druck von 3 bis 20 bar einer Temperatur von 100°C bis 212,37°C während 0,3 bis 15 Minuten ausgesetzt werden und dass der Druck über eine Zeit von 10 Sekunden bis 600 Sekunden auf Umgebungsdruck abgebaut wird.

3. Verfahren nach Anspruch 1 oder 2, **dadurch gekennzeichnet, dass** die Druck- und Temperaturbehandlung bei einem Druck von 3 bis 16 bar erfolgt.

4. Verfahren nach einem der Ansprüche 1 oder 2, **dadurch gekennzeichnet, dass** die Druck- und Temperaturbehandlung bei einer Temperatur von 120°C bis 210°C erfolgt.

5. Verfahren nach einem der Ansprüche 1 bis 4, **dadurch gekennzeichnet, dass** die Druck- und Temperaturbehandlung bei feuchter Atmosphäre erfolgt.

6. Verfahren nach einem der Ansprüche 1 bis 5, **dadurch gekennzeichnet, dass** die Kartoffelscheiben nach der Druck- und Temperaturbehandlung getrocknet werden.

7. Verfahren nach Anspruch 6, **dadurch gekennzeichnet, dass** die Kartoffelscheiben auf einem Feuchtegehalt zwischen 11% und 25% getrocknet werden.

8. Verfahren nach einem der Ansprüche 1 bis 7, **dadurch gekennzeichnet, dass** die Kartoffeln oder Kartoffelscheiben vor der Druck- und Temperaturbehandlung Hochspannungsimpulsen ausgesetzt werden.

9. Verfahren nach einem der Ansprüche 1 bis 8, **dadurch gekennzeichnet, dass** die Kartoffelscheiben nach der Druck- und Temperaturbehandlung Hochspannungsimpulsen ausgesetzt werden.

10. Verfahren nach einem der Ansprüche 1 bis 9, **dadurch gekennzeichnet, dass** die fertigen Chips mit Fett besprüht werden.

11. Verfahren nach einem der Ansprüche 1 bis 10, **dadurch gekennzeichnet, dass** die fertigen Chips gewürzt werden.

12. Verfahren nach einem der Ansprüche 1 bis 11, **dadurch gekennzeichnet, dass** die Druck- und Temperaturbehandlung in einer Hochdruckkammer erfolgt.

13. Verfahren nach einem der Ansprüche 1 bis 12, **dadurch gekennzeichnet, dass** die Druck- und Temperaturbehandlung chargenweise erfolgt.

14. Verfahren nach einem der Ansprüche 1 bis 12, **dadurch gekennzeichnet, dass** die Druck- und Temperaturbehandlung in einer auf beiden Seiten mit Druckschleusen versehenen Hochdruckkammer erfolgt, durch die die Kartoffelscheiben kontinuierlich hindurchgefördert werden.

15. Verfahren nach einem der Ansprüche 1 bis 14, **dadurch gekennzeichnet, dass** die Trocknung der Kartoffelchips mit Heißdampf erfolgt.

## Claims

1. Method for the production of potato crisps in which the potatoes are washed, cut into slices and subsequently processed to potato crisps in a gas at elevated temperature and pressure and subsequently cooled, **characterized in that** during the processing step and during cooling, pressure and temperature are held at values such that the temperature is held below the boiling temperature of water at the respectively prevailing pressure.

2. Method according to Claim 1, **characterized in that** the potato slices are exposed at a pressure of 3 to 20 bar to a temperature of 100°C to 212.37°C for 0.3 to 15 minutes, and **in that** the pressure is lowered to ambient pressure over a time of 10 seconds to 600 seconds.

3. Method according to Claim 1 or 2, **characterized in that** the pressure and temperature treatment proceeds at a pressure of 3 to 16 bar.

4. Method according to either of Claims 1 and 2, **characterized in that** the pressure and temperature treatment proceeds at a temperature of 120°C to 210°C.

5. Method according to any one of Claims 1 to 4, **characterized in that** the pressure and temperature treatment proceeds under a moist atmosphere.

6. Method according to any one of Claims 1 to 5, **characterized in that** the potato slices are dried after the pressure and temperature treatment.

7. Method according to Claim 6, **characterized in that** the potato slices are dried to a moisture content between 11% and 25%.

8. Method according to any one of Claims 1 to 7, **characterized in that** the potatoes or potato slices are exposed before the pressure and temperature treatment to high-voltage pulses.

9. Method according to any one of Claims 1 to 8, **characterized in that** the potato slices are exposed after the pressure and temperature treatment to high-voltage pulses.

10. Method according to any one of Claims 1 to 9, **characterized in that** the finished crisps are sprayed with fat.

11. Method according to any one of Claims 1 to 10, **characterized in that** the finished crisps are seasoned.

12. Method according to any one of Claims 1 to 11, **characterized in that** the pressure and temperature treatment proceeds in a high-pressure chamber.

13. Method according to any one of Claims 1 to 12, **characterized in that** the pressure and temperature treatment proceeds batchwise.

14. Method according to any one of Claims 1 to 12, **characterized in that** the pressure and temperature treatment proceeds in a high-pressure chamber provided with pressure locks on both sides, through which high-pressure chamber the potato slices are continuously transported.

15. Method according to any one of Claims 1 to 14, **characterized in that** the potato crisps are dried using hot steam.

## Revendications

1. Procédé pour la production de chips de pommes de terre, dans lequel les pommes de terre sont lavées, coupées en tranches et traitées ensuite sous une température élevée et sous pression dans un gaz pour obtenir des chips et sont refroidies ensuite, **caractérisé en ce que** pendant l'étape de traitement et pendant le refroidissement, la pression et la température sont maintenues à des valeurs telles que la température est maintenue en dessous de la température d'ébullition de l'eau régnant avec la pression respectivement disponible.

2. Procédé selon la revendication 1, **caractérisé en ce que** les tranches de pommes de terre sont exposées, sous une pression de 3 à 20 bars, à une température de 100°C à 212,37°C pendant 0,3 à 15 minutes, et **en ce que** la pression est abaissée à la pression atmosphérique pendant un intervalle de temps de 10 secondes à 600 secondes.

3. Procédé selon la revendication 1 ou 2, **caractérisé en ce que** le traitement sous pression et température s'effectue avec une pression de 3 à 16 bars.

4. Procédé selon la revendication 1 ou 2, **caractérisé en ce que** le traitement sous pression et température s'effectue à une température de 120°C à 210°C.

5. Procédé selon l'une quelconque des revendications 1 à 4, **caractérisé en ce que** le traitement sous pression et température s'effectue sous atmosphère humide.

6. Procédé selon l'une quelconque des revendications 1 à 5, **caractérisé en ce que** les tranches de pommes de terre sont séchées après le traitement sous pression et température.

7. Procédé selon la revendication 6, **caractérisé en ce que** les tranches de pommes de terre sont séchées jusqu'à une teneur en humidité entre 11 % et 25 %.

8. Procédé selon l'une quelconque des revendications 1 à 7, **caractérisé en ce que** les pommes de terre ou les tranches de pommes de terre sont exposées à des impulsions de haute tension avant le traitement sous pression et température.

9. Procédé selon l'une quelconque des revendications 1 à 8, **caractérisé en ce que** les tranches de pommes de terre sont exposées à des impulsions de haute tension après le traitement sous pression et température.

10. Procédé selon l'une quelconque des revendications 1 à 9, **caractérisé en ce qu'**une graisse est pulvérisée sur les chips finies.

11. Procédé selon l'une quelconque des revendications 1 à 10, **caractérisé en ce que** les chips finies sont épicées.

12. Procédé selon l'une quelconque des revendications 1 à 11, **caractérisé en ce que** le traitement sous pression et température est effectué dans une chambre sous haute pression.

13. Procédé selon l'une quelconque des revendications 1 à 12, **caractérisé en ce que** le traitement sous pression et température est effectué par lots.

14. Procédé selon l'une quelconque des revendications 1 à 12, **caractérisé en ce que** le traitement sous pression et température est effectué dans une chambre sous haute pression, qui est munie de sas sous pression sur les deux côtés et à travers laquelle les tranches de pommes de terre sont transportées en continu.

15. Procédé selon l'une quelconque des revendications 1 à 14, **caractérisé en ce que** le séchage des chips de pommes de terre est effectué à la vapeur chaude.
